# DEMANDE DE BREVET EUROPEEN

(11) **EP 3 050 911 A1**
(43) Date de publication de la demande: **03.08.2016**
(21) Numéro de dépôt: 16152691.8
(22) Date de dépôt: 26.01.2016
(51) Int. Cl.: C08G 77/442, C09J 7/02, C08L 23/02, C08L 23/04, C08L 23/06, C08L 23/10, C08L 83/04, C08L 53/00, C08J 5/18, G09F 3/04, B05D 5/08

(54) **FILM DE POLYOLEFINE PRESENTANT DES PROPRIETES DE SURFACES ANTIADHERENTES**

(30) Priorité: 02.02.2015 FR 1550771
(71) Demandeur: Societe des Polymeres Techniques, 76450 Cany-Barville (FR)
(72) Inventeur: FLEURY, Etienne, 69510 Soucieu en Jarrest (FR); CHAUMONT, Philippe, 69120 Vaulx-en-Velin (FR); SINTES, Nathalie, 69100 Villeurbanne (FR); THEODOROU, Thomas, 69005 Lyon (FR); DANIEL, Cécile, 76940 Saint Nicolas de Bliquetuit (FR); MAGNI, Eric, 76890 Saint Ouen du Breuil (FR); ARNAUT, Clémentine, 76400 Fecamp (FR)
(74) Mandataire: Hirsch & Associés

(57) **Abrégé**

Une composition comprenant:
a) au moins 50 % en masse d'une polyoléfine;
b) un polysiloxane fonctionnalisé par des fonctions époxy;
c) un agent compatibilisant de la polyoléfine avec le polysiloxane, ledit agent compatibilisant étant obtenu par formation de fonctions imide entre la polyoléfine greffée par des fonctions anhydride maléique et un polysiloxane mono- ou difonctionnalisé par des fonctions amine primaire ;

la polyoléfine de la matrice et de l'agent compatibilisant étant soit un polyéthylène, soit un polypropylène.

Cette composition peut être extrudée et étirée pour former un film qui, après avoir été soumis à un rayonnement UV, peut servir de support dans une étiquette auto-adhésive, lequel support présente des propriétés de surface non adhérentes.

## Description

### DOMAINE TECHNIQUE

L'invention se rapporte au domaine technique des films plastiques présentant des propriétés de surfaces anti-adhérentes ainsi qu'aux procédés permettant leur fabrication.

### ART ANTERIEUR

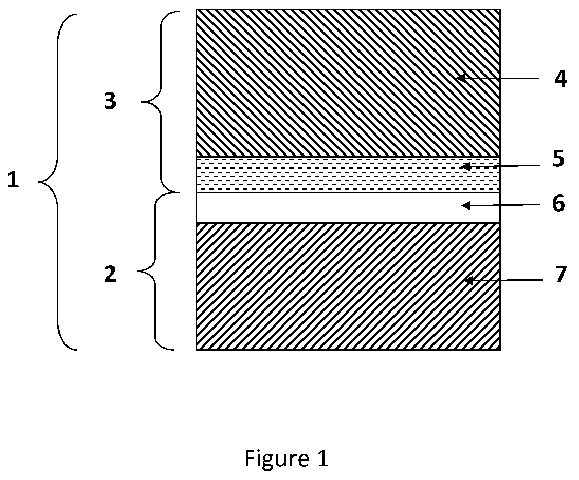

Il est connu d'utiliser des étiquettes auto-adhésives à des fins de présentation d'une information, telle qu'un prix, une dénomination ou un code-barres, ou à des fins décoratives. La structure d'une étiquette auto-adhésive est représentée schématiquement à la figure 1. Une telle étiquette (1) comprend une couche support (3), transparente ou non, sur laquelle peut être imprimée une information ou un motif décoratif, et une couche protectrice (2) (désignée en anglais par le terme de « release liner »). La couche support imprimable comprend un film généralement en plastique ou en papier (4) recouvert sur sa face orientée vers la couche protectrice par une couche d'adhésif (5). La couche support imprimable se décolle aisément de la couche protectrice juste avant son application sur la surface d'un objet, tel qu'un emballage ou un récipient par exemple en verre ou en matière plastique.

La couche d'adhésif est constituée d'une substance conférant à la couche support imprimable un pouvoir collant immédiat à température ambiante (souvent désigné sous le terme de « tack »), lequel permet l'adhésion instantanée de la couche support imprimable à un produit sous l'effet d'une légère pression.

La couche protectrice peut être constituée d'un film (7) de papier ou de polymère, par exemple un polyester ou une polyoléfine. La face de la couche protectrice en contact avec la couche d'adhésif présente généralement des propriétés anti-adhérentes qui facilitent un décollement rapide et uniforme de la couche support imprimable. Ces propriétés anti-adhérentes sont conférées par la présence d'une couche d'un revêtement anti-adhérent (6). Tel est le cas par exemple de la couche protectrice employée dans la fabrication d'un carnet de timbres auto-adhésifs. Chaque timbre constitue une couche support imprimable qui adhère à une couche protectrice dont la surface possède des propriétés anti-adhérentes.

Il est connu de conférer des propriétés de surface anti-adhérentes en appliquant à la surface de la couche protectrice un film de polysiloxane, encore appelé silicone, de quelques microns d'épaisseur. Un polysiloxane est un polymère formé d'une chaîne principale inorganique constituée d'une répétition de liaisons siloxanes (...-Si-O-Si-...). Des groupes organiques sont liés aux atomes de silicium. Le silicone le plus courant est le poly(diméthylsiloxane) linéaire ou PDMS, dans lequel deux groupements méthyl sont liés à un atome de silicium de la chaîne principale comme illustré ci-après.

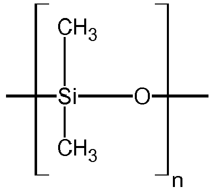

La couche protectrice recouverte d'un film de silicone anti-adhérent peut être fabriquée par un procédé comprenant les deux étapes suivantes :
- fabrication d'un film soit par un procédé papetier, soit par un procédé d'extrusion de film dans le cas d'un film en matière plastique ;
- enduction de l'une des faces du film par une matière siliconée, l'épaisseur de la couche de matière siliconée étant généralement de l'ordre du micron d'épaisseur. Le silicone après réticulation ("séchage") confère des propriétés anti-adhérentes au film. Les silicones de la gamme « TEGO^{®} RC-silicones » commercialisés par la société Evonik peuvent être utilisés comme matière siliconée dans ce procédé à deux étapes.

L'une des limitations de ce procédé provient de l'absence de flexibilité concernant le choix du film support. Il est difficile de gérer un stock comprenant un grand nombre de références de films ; ces films peuvent en effet varier selon leur teinte, leur épaisseur, leur touché, leurs propriétés mécaniques, leurs propriétés d'aspect.

Une autre limitation provient de l'impossibilité de réaliser des petites séries en raison de la forte inertie des systèmes d'enduction. En effet, les dispositifs utilisés pour l'enduction du film sont complexes à régler en raison de la faible épaisseur de la couche de matière siliconée (0,5 à 2 µm après évaporation éventuelle du solvant). Ces dispositifs nécessitent souvent des équipements thermiques pour déposer la matière siliconée, évaporer le solvant éventuel et réticuler la matière siliconée.

Un procédé alternatif développé par la société Coating Plasma Industrie consiste à greffer chimiquement du silicone à la surface d'un film en utilisant la technique plasma. On fait passer le film dans une enceinte où règne un environnement de « plasma froid » contenant un gaz constitué de molécules de silicone. Sous l'effet de l'excitation plasma, la surface du film et le gaz sont chimiquement activés et leur recombinaison conduit au greffage de silicone en surface. Ce procédé est inadapté aux faibles volumes de film à produire et pour des films dont la largeur est variable. Ce procédé est décrit sur le site http://www.cpi-plasma.com/pdf/cpi_fr.pdf.

Un autre procédé alternatif consiste à incorporer un concentré d'additifs à base de silicone, encore appelé mélange-maître ou «masterbatch», dans un film de polymère lors de son extrusion. Le mélange-maître est utilisé en dilution dans le polymère. Or, on a observé une propension du silicone à migrer de la couche protectrice vers la couche d'adhésif, ce qui a pour conséquence de dégrader les propriétés adhésives de la couche imprimable.

La demande de brevet FR 13 01557 décrit une composition de mélange-maître destinée à être mélangée à une polyoléfine. Le mélange-maître est extrudé pour former un film. Le film est ensuite irradié par un rayonnement UV. Cette dernière étape lui confère des propriétés anti adhérentes. Le procédé de fabrication décrit permet de s'affranchir de l'étape d'enduction de la matière siliconée sur le film. Cette composition de mélange-maître contient un photo amorceur de polymérisation. On a observé que le photo amorceur de polymérisation subit une dégradation de ses propriétés en raison de la chaleur dégagée au moment de l'extrusion du mélange-maître. On recherche donc un moyen de pouvoir s'affranchir de l'étape de l'ajout du photo amorceur de polymérisation au moment de la fabrication du mélange-maître.

On recherche également un photo amorceur de polymérisation qui ne soit pas dégradé par la chaleur.

On recherche également une composition antiadhésive qui une fois extrudée sous forme de film, présente des propriétés de surface anti adhérentes qui soient supérieures à celles obtenues pour un film obtenu à partir du mélange-maître décrit dans la demande FR 13 01557.

Enfin, on recherche une composition antiadhésive dans laquelle le silicone est fixé de manière durable à la surface du film.

### RESUME DE L'INVENTION

L'invention a pour objet une composition comprenant:
a) au moins 50 % en masse d'une matrice de polyoléfine;
b) un polysiloxane fonctionnalisé par des fonctions époxy;
c) un agent compatibilisant de la polyoléfine avec le polysiloxane, ledit agent compatibilisant étant obtenu par formation de fonctions imide entre une polyoléfine greffée par des fonctions anhydride maléique et un polysiloxane mono- ou difonctionnalisé par des fonctions amine primaire ;
la polyoléfine de la matrice et de l'agent compatibilisant étant soit un polyéthylène, soit un polypropylène.

Selon un mode de réalisation, la composition comprend moins de 1 %, de préférence 0,1 % ou moins en masse d'un amorceur de polymérisation cationique, activable par rayonnement UV.

Selon un mode de réalisation, la composition ne comprend pas d'amorceur de polymérisation cationique, activable par rayonnement UV.

Selon un mode de réalisation, le polysiloxane mono- ou difonctionnalisé par des fonctions amine primaire présente avant fonctionnalisation une masse molaire comprise entre 200 et 20000 g/mol, de préférence entre 3000 et 12000 g/mol, de préférence encore entre 6000 et 10000 g/mol.

Selon un mode de réalisation, la composition comprend:
a) de 80 à 97,9 % en masse de polyoléfine ;
b) de 2 à 10 % en masse de polysiloxane fonctionnalisé par des fonctions époxy ;
c) de 0,1 à 10 % en masse d'agent compatibilisant.

Selon un mode de réalisation, la polyoléfine est un polyéthylène de densité comprise entre 0,910 et 0,930 g·cm⁻³ selon la norme ISO1183.

L'invention a également pour objet un procédé de fabrication de la composition selon l'invention, ledit procédé comprenant les étapes de:
i) préparation d'un agent compatibilisant par formation de fonctions imide entre une polyoléfine greffée par des fonctions anhydride maléique et un polysiloxane mono- ou difonctionnalisé par des fonctions amine primaire;
ii) mélange de l'agent compatibilisant avec une polyoléfine et un polysiloxane fonctionnalisé par des fonctions époxy, les polyoléfines utilisées aux étapes i) et ii) étant soit un polyéthylène, soit un polypropylène ;
iii) éventuellement, ajout d'un amorceur de polymérisation au mélange de l'étape ii).

L'invention a également pour objet un procédé de fabrication d'un film comprenant les étapes de :
a) approvisionnement de la composition selon l'invention ou préparation de ladite composition selon le procédé de fabrication de la composition tel que décrit ci-avant;
b) extrusion de la composition pour former un film;
c) étirement du film ;
d) exposition du film à un rayonnement UV.

Selon un mode de réalisation, la composition obtenue à l'étape a) est co-extrudée à l'étape b) avec un film de polyéthylène ou de polypropylène.

Selon un mode de réalisation, on ajoute un amorceur de polymérisation cationique, activable par rayonnement UV, de préférence à une proportion inférieure à 1 % en masse de la composition à l'étape b).

Selon un mode de réalisation, la proportion de l'amorceur de polymérisation cationique, activable par rayonnement UV est inférieure ou égale à 0,1 % en masse de la composition.

L'invention a également pour objet un film susceptible d'être obtenu par le procédé selon tel que décrit ci-avant.

Enfin l'invention a pour objet une étiquette auto-adhésive comprenant une couche support et une couche protectrice comprenant le film décrit ci-avant.

### DESCRIPTION DES FIGURES

La Figure 1 représente une étiquette auto-adhésive (1) de l'art antérieur.
La Figure 2a représente une matrice de polyoléfine (8) comprenant des inclusions de polysiloxane (9) sous forme de gouttelettes. La surface sphérique des inclusions de polysiloxane est recouverte par un agent compatibilisant (10).
La Figure 2b schématise la structure du film obtenu après extrusion de la composition de l'invention, lequel film comprend une matrice de polyéthylène dans laquelle le polysiloxane a migré à la surface. Il peut rester des inclusions de polysiloxane dans la matrice. Le compatibilisant se retrouve à l'interface entre le polysiloxane et la matrice.
La Figure 3 représente la structure d'un film obtenu par coextrusion de deux couches (2') et (11).
La Figure 4 représente la structure d'un film obtenu par coextrusion de trois couches (2'), (11) et (2").

### DESCRIPTION DETAILLEE

### 1) Synthèse d'un agent compatibilisant:

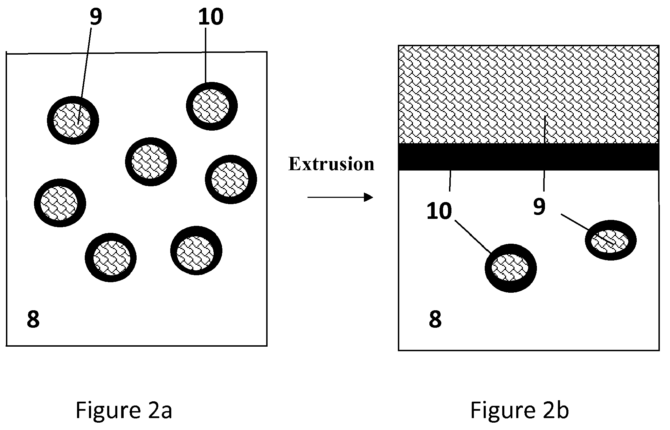

Un polysiloxane et une polyoléfine sont des polymères non miscibles. Le rôle de l'agent compatibilisant est de stabiliser la dispersion de polysiloxane dans une matrice de polyoléfine. Comme le montre la figure 2a, l'agent compatibilisant (10) se positionne à l'interface entre le polysiloxane (9) et la polyoléfine (8) de la matrice en réduisant la tension interfaciale entre ces deux matériaux. Le polysiloxane se présente alors sous la forme d'inclusions dispersées dans la matrice de polysiloxane.

Selon l'invention, l'agent compatibilisant est un copolymère obtenu par réaction entre une polyoléfine fonctionnalisée par des fonctions anhydride maléique et un polysiloxane fonctionnalisé par des fonctions amine primaire. De préférence, le polysiloxane est le polydiméthylsiloxane.

La réaction entre les fonctions anhydride maléique et les fonctions amine primaire conduit à la formation d'une fonction imide. La réaction de formation de la fonction imide est la suivante:

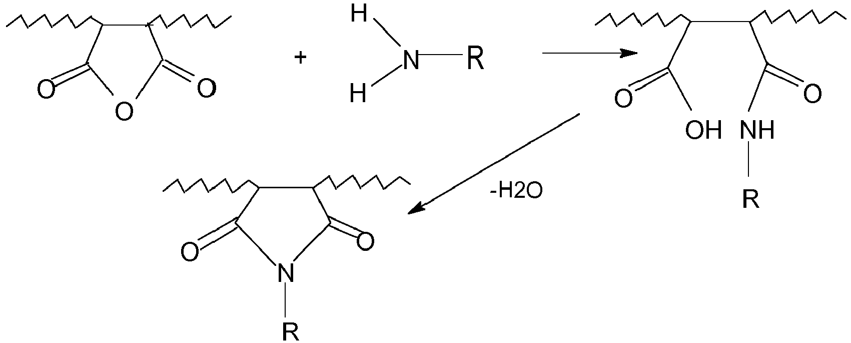

La présence de fonctions imide peut être mise en évidence par la technique de spectroscopie infra-rouge (IR) qui fait apparaitre un pic à 1706 cm⁻¹, caractéristique de la fonction imide.

La fonction amine primaire peut se situer à chaque extrémité de la chaine de polysiloxane. On parle de polysiloxane difonctionnalisé. Elle peut aussi se situer sur une extrémité seulement de la chaine de polysiloxane. On parle de polysiloxane monofonctionnalisé. De préférence, la chaine de polysiloxane est monofonctionnalisée. La monofonctionnalisation permet d'obtenir un copolymère présentant une structure en peigne qui favorise l'enchevêtrement des chaines de polysiloxane du copolymère avec les chaines de polysiloxane fonctionnalisé par des fonctions époxy comme décrit ci-après. La compatibilité de la polyoléfine avec le polysiloxane portant des fonctions époxy en est améliorée. Le polysiloxane difonctionnalisé donne de moins bons résultats que le polysiloxane monofonctionnalisé en raison de sa tendance à réticuler.

Selon un mode de réalisation, l'agent compatibilisant comprend :
- de 90 à 99 % en masse de polyoléfine greffée par des fonctions anhydride maléique et
- de 1 à 10 % en masse de polysiloxane fonctionnalisé par des fonctions amine primaire.

De préférence, l'agent compatibilisant comprend :
- de 90 à 95 % en masse de polyoléfine greffée par des fonctions anhydride maléique et
- de 5 à 10 % en masse de polysiloxane fonctionnalisé par des fonctions amine primaire.

Selon un autre mode de réalisation, l'agent compatibilisant comprend :
- de 92 à 97 % en masse de polyoléfine greffée par des fonctions anhydride maléique et
- de 3 à 8 % en masse de polysiloxane fonctionnalisé par des fonctions amine primaire.

La masse molaire en nombre du polysiloxane utilisé dans la préparation de l'agent compatibilisant peut être comprise entre 200 et 20000 g/mol. De préférence, elle est comprise entre 3000 et 12000 g/mol, de préférence encore entre 6000 et 10000 g/mol. Une gamme particulièrement préférée va de 5500 à 6500 g/mol. Ces gammes de masse molaire sont celles qui permettent d'obtenir la meilleure stabilité thermique de l'agent compatibilisant.

La polyoléfine qui subit le greffage par les fonctions anhydride maléique est soit un polyéthylène, soit un polypropylène. On entend par polyéthylène des homopolymères de polyéthylène ou des copolymères contenant au moins 70 % en mole de motifs éthylène. On entend par polypropylène des homopolymères de polypropylène ou des copolymères contenant au moins 70 % en mole de motifs propylène. De préférence, les copolymères de polyéthylène et de polypropylène contiennent au moins 95 % en mole de motifs éthylène ou propylène respectivement.

Une polyoléfine greffée par des fonctions anhydride maléique est disponible auprès de la Société Arkema sous la dénomination commerciale Orevac® 18302N. Il s'agit de polyéthylène de densité 0,912 g/cm³, contenant 5000 ppm d'anhydride maléique. La concentration en fonctions réactives est de 5,10.10⁻⁵ mol/g.

Le mélange du polysiloxane fonctionnalisé par des fonctions amine et de la polyoléfine greffée par des fonctions anhydride maléique peut être effectué par tout type d'appareil d'extrusion, de préférence une extrudeuse bi-vis, Leistritz® (60D) ou Maris® (31D). La température du mélange réactionnel est choisie de façon à diminuer la viscosité de la polyoléfine pour la rendre malléable tout en évitant sa décomposition. Le mélange de la polyoléfine greffée et du polysiloxane fonctionnalisé peut par exemple être effectué à une température comprise entre 100 et 280°C.

Dans le cas d'une extrudeuse de type Leistritz® (60D), les vis peuvent être mises en rotation à une vitesse de 1200 t/min environ pour un faible débit de 3kg/h.

Dans le cas d'une extrudeuse de type Maris® (31D), les vis peuvent être mises en rotation à une vitesse de 900 t/min environ pour un débit de 20kg/h.

Une extrudeuse bi-vis développe suffisamment de forces de cisaillement pour obtenir un mélange intime des deux polymères, ce qui favorise la formation de liaisons covalentes entre le polysiloxane fonctionnalisé et la polyoléfine greffée. L'agent compatibilisant ainsi obtenu est de préférence transformé en granulés à la sortie de l'extrudeuse.

La quantité de polysiloxane n'ayant pas réagi avec la polyoléfine greffée peut être mesurée après extraction dans du cyclohexane ou du tétrahydrofurane et séchage.

### 2) Fabrication du mélange-maître ou compound

Le terme de mélange-maître désigne dans ce qui suit une composition caractérisée par une proportion massique élevée de polysiloxane fonctionnalisé par des fonctions époxy, par exemple au moins 40% en masse par rapport à la masse de la composition. Le mélange-maître est destiné à être dilué dans une polyoléfine.

La description qui suit s'applique également à un compound, terme qui désigne une composition caractérisée par une proportion plus faible de polysiloxane fonctionnalisé que pour le mélange-maître, par exemple inférieure ou égale à 20% en masse par rapport à la masse de la composition. Le compound est destiné à être utilisé tel quel.

Dans cette étape, on mélange l'agent compatibilisant obtenu avec :
- un polysiloxane fonctionnalisé par des fonctions époxy qui permettront, après l'extrusion du mélange-maître sous forme de film, la réticulation du polysiloxane sous l'effet d'un rayonnement UV;
- une polyoléfine pouvant être différente de celle utilisée dans la fabrication de l'agent compatibilisant ;
- éventuellement un amorceur de polymérisation cationique, activable par rayonnement UV.

### a) Polysiloxane fonctionnalisé par des fonctions époxy :

Le polysiloxane comporte des fonctions époxy réactives qui induisent sa réticulation sous l'action de la décomposition par les UV d'un amorceur de polymérisation. Ce polysiloxane incorporé à la polyoléfine utilisée pour la matrice diminue la tension de surface de la polyoléfine. Un faible pourcentage de polysiloxane, c'est-à-dire inférieur ou égal à 10 %, suffit à modifier la tension de surface car il a été observé que le polysiloxane migre à la surface de la polyoléfine. Les caractéristiques mécaniques du film de polyoléfine ne sont cependant pas modifiées par la présence du polysiloxane.

Un polysiloxane fonctionnalisé par des fonctions époxy est disponible commercialement auprès de la Société Evonik sous la dénomination commerciale TEGO^{®} RC 1403. Il a pour formule:

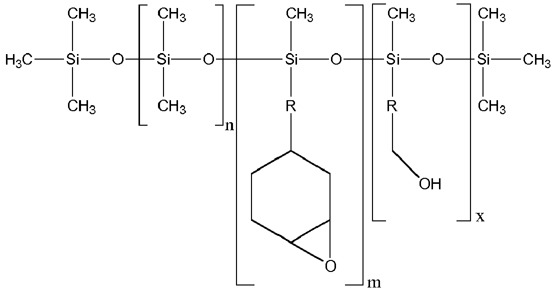

### b) Polyoléfine utilisée pour la matrice:

La polyoléfine utilisée comme matrice est soit un polyéthylène, soit un polypropylène. On entend par polyéthylène des homopolymères de polyéthylène ou des copolymères contenant au moins 70 % en mole de motifs éthylène. On entend par polypropylène des homopolymères de polypropylène ou des copolymères contenant au moins 70 % en mole de motifs propylène. De préférence, les copolymères de polyéthylène et de polypropylène contiennent au moins 95 % en mole de motifs éthylène ou propylène respectivement. Le terme matrice signifie que la polyoléfine sert de support aux inclusions de polysiloxane fonctionnalisé par les fonctions époxy, celles-ci étant dispersées dans la polyoléfine.

La polyoléfine utilisée pour la matrice peut être un polyéthylène de basse densité, c'est-à-dire comprise entre 0,910 et 0,930 g•cm⁻³ selon la norme ISO 1183. Un tel polyéthylène est disponible commercialement par exemple auprès de la Société Basell sous les dénominations commerciales Lupolen® 2420F et Lupolen® 3020K. Le Lupolen® 2420F et le Lupolen® 3020K ont des masses molaires en nombre estimées expérimentalement d'environ 16500 et 9000 g/mol respectivement.

### c) Amorceur de polymérisation:

Un amorceur de polymérisation cationique peut être ajouté au mélange comprenant la polyoléfine servant de matrice, le polysiloxane fonctionnalisé par des fonctions époxy et l'agent compatibilisant. Cet amorceur peut être de l'hexafluoroantimonate d'iodonium. Il est disponible commercialement auprès de la Société Evonik sous la dénomination commerciale TEGO® PC 1467.

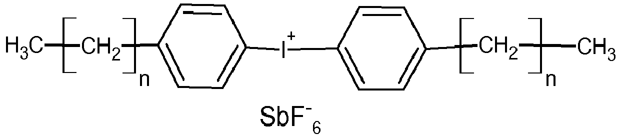

D'autres amorceurs de polymérisation cationique tels que les UV CATA 211 (borate d'iodonium) ou UV CATA 232 de la Société Bluestar Silicones conviennent également.

L'amorceur de polymérisation peut être incorporé au mélange comprenant la polyoléfine servant de matrice et l'agent compatibilisant soit au moment de l'extrusion du mélange-maître, soit à l'étape ultérieure d'extrusion du film.

Il est généralement introduit dans le mélange-maître à une proportion inférieure ou égale à 1 % en masse du mélange-maître, de préférence à une proportion inférieure ou égale à 0,5 % en masse, de préférence encore à une proportion inférieure ou égale à 0,1 % en masse.

### d) Compositions de mélange-maître et de compound:

La polyoléfine utilisée pour la matrice représente en général au moins 50 %, de préférence au moins 70 %, de préférence encore au moins 90 % de la masse du mélange-maître, par exemple environ 95 %.

L'agent compatibilisant est présent en une proportion généralement inférieure ou égale à 10 % de la masse du mélange-maître, par exemple de 3 à 7 %.

Le polysiloxane fonctionnalisé par des fonctions époxy est présent en une proportion généralement inférieure ou égale à 15 % de la masse du mélange-maître, par exemple, 5, 10 ou 13 %.

Si présent, l'amorceur de polymérisation est utilisé en une proportion inférieure ou égale à 1 % en masse du mélange-maître, de préférence inférieure ou égale à 0,5 %, de préférence encore inférieure ou égale à 0,1 %.

Dans un mode de réalisation préféré, la composition suivante de mélange-maître peut être fabriquée:
- 90 % en masse d'une matrice de polyéthylène ;
- 5 % en masse de polysiloxane fonctionnalisé par des fonctions époxy ;
- 5 % en masse d'agent compatibilisant obtenu par réaction d'un mélange comprenant :
   - 95 % en masse de polyéthylène greffé par de l'anhydride maléique et
   - 5 % en masse d'un polysiloxane.

On ajoute à cette composition 0,1 % en masse d'amorceur de polymérisation cationique.

De préférence, le polysiloxane mono fonctionnalisé par des fonctions amine primaire présente avant fonctionnalisation une masse molaire d'environ 6000 g/mol.

Les différents constituants sont mélangés à une température comprise entre 160 et 240°C, de préférence entre 180 et 220°C, de préférence environ 200°C.

Pour réaliser le mélange, deux technologies d'extrusion peuvent être utilisées:
a) La technologie de type Buss® qui permet une sollicitation en élongation plutôt qu'en cisaillement, ce qui diminue les frottements et réduit la dégradation du matériau et permet de réduire le risque de réticulation du silicone-époxy en cours d'extrusion.
b) La technologie dite "bi-vis" de type Maris® qui permet d'obtenir via un cisaillement une dispersion fine d'un matériau dans l'autre matériau. En comparaison avec la technologie Buss, cet outil a la capacité de générer une pression plus importante ce qui favorisera le mélange.

### 3) Extrusion du mélange-maître pour former un film:

On extrude le mélange-maître, après que celui-ci a été éventuellement mélangé avec une polyoléfine, pour former un film. La polyoléfine éventuellement utilisée peut être différente de celles utilisées dans l'étape de fabrication de l'agent compatibilisant et l'étape de fabrication du mélange-maître. Le mélange est porté à une température suffisante pour permettre sa fusion. Une extrudeuse mono-vis est généralement utilisée.

Le passage à l'état fondu du mélange-maître permet la migration du polysiloxane fonctionnalisé par des fonctions époxy à la surface de la matrice de polyoléfine comme le montre la Figure 2b, en sortie de vis. La démixtion partielle du polysiloxane facilite la formation d'une couche de faible énergie à la surface du film.

Le mélange-maître peut aussi être coextrudé avec un film plastique, tel que le polypropylène ou le polyéthylène, afin d'obtenir une couche protectrice d'une étiquette auto-adhésive.

Le mélange-maître ou le compound peut aussi être coextrudé avec d'autres matériaux (polyoléfine ou autre), afin d'obtenir un film multicouches présentant les propriétés de surface du film selon l'invention et les propriétés de coeur propre à l'application visée. Un exemple serait l'étiquette auto-adhésive, produit de la coextrusion du mélange-maître ou du compound en surface et d'un polyéthylène ou polypropylène en coeur pour assurer les propriétés de rigidité nécessaire à l'étiquette.

La température d'extrusion doit être suffisamment élevée pour obtenir un mélange-maître suffisamment fluide pour former un film mais elle ne doit pas être trop élevée pour éviter la réticulation du polysiloxane fonctionnalisé par des fonctions époxy, ce qui pourrait conduire à un blocage de la vis de l'extrudeuse.

Lorsque le photoamorceur n'a pas été introduit au moment de la fabrication du mélange-maître, il peut être introduit au moment de l'extrusion du mélange-maître, sous les formes suivantes:
a) sous forme liquide,
b) sous forme de prémix avec une poudre de polyoléfine, par exemple du polyéthylène, de même grade que celui utilisé pour le mélange-maître.

Dans ces deux cas, le photo amorceur pourra soit être pré-mélangé avec les granulés du mélange-maître pour être introduit simultanément dans la trémie de l'extrudeuse, soit être injecté séparément par un doseur adéquat (ou une pompe) en début de vis d'extrusion ou au milieu de l'extrudeuse, par exemple via un compartiment spécial dans le fourreau de l'extrudeuse.

Une fois extrudé, le film est étiré. L'étape d'extrusion-étirement du film peut être réalisée par le procédé connu d'extrusion-gonflage. Dans ce procédé, le mélange de granulés est versé dans une trémie pour alimenter la vis de l'extrudeuse. Dans l'extrudeuse, il est chauffé et ramolli grâce à une vis sans fin qui se trouve dans un tube chauffé pour rendre le mélange malléable. La vis entraîne le mélange vers une filière annulaire.

En sortie de la filière annulaire, on insuffle de l'air de manière à faire se gonfler et s'élever verticalement une longue bulle de film. L'étirement du film est obtenu par injection d'air dans le film encore à l'état liquide. Dans ce procédé, l'étirement du film se fait dans la direction de défilement du film et également dans la direction perpendiculaire à la direction de défilement du film.

L'étape d'extrusion-étirement du film peut encore être réalisée par le procédé connu d'« extrusion-cast » encore appelé « extrusion à plat » dans lequel le mélange de granulés est versé dans une trémie pour alimenter la vis de l'extrudeuse. Dans l'extrudeuse, il est chauffé et ramolli, grâce à une vis sans fin qui se trouve dans un tube chauffé pour rendre le mélange malléable. La vis entraîne le mélange vers une filière plate.

En sortie de la filière plate, le mélange passe sur au moins deux rouleaux. En augmentant la vitesse de rotation d'un premier rouleau par rapport à celle d'un second rouleau placé en amont du premier rouleau, on provoque un étirement unidirectionnel du film dans la direction de défilement du film. L'étirement est obtenu par réglage de la différence de vitesses entre deux rouleaux successifs.

Le film obtenu présente généralement une épaisseur comprise entre 20 et 100 microns, de préférence entre 25 et 60 microns.

### 3) Irradiation du film:

Le film est ensuite exposé à un rayonnement UV. Ce rayonnement induit la décomposition de l'amorceur de polymérisation qui permet l'amorçage de la réaction de polymérisation par ouverture de cycle des fonctions époxy présentes sur les chaînes de polysiloxane. Les chaînes de polysiloxane vont donc réticuler et permettre la formation d'une couche de polymère présentant une forte adhérence sur le film de polyoléfine. La cohésion du système PDMS - polyoléfine est renforcée par l'agent compatibilisant élaboré lors de la première étape et présent dans la formulation.

Le film peut recevoir un rayonnement UV à une dose allant de 50 et 500 W/cm, de préférence de 100 à 200 W/cm, pour une vitesse de défilement du film d'environ 50 m/min.

La technique d'analyse dispersive en énergie (EDX) permet de confirmer la présence d'atome de silicium en surface, ce qui confirme la migration des chaînes polysiloxanes après extrusion-étirement du film vers la surface du film.

La technique de tensiométrie dynamique permet également de confirmer la présence de silicone à l'extrême surface du film, par calcul des tensions de surface via la mesure d'angles de contact que forment des solvants de référence (eau, diiodométhane) sur ce film. Des mesures en hystérèse permettent de qualifier le caractère visco-élastique (liberté de mouvement) de cette surface.

Les propriétés anti-adhérentes du film peuvent être évaluées par une mesure de la force de pelage nécessaire pour retirer un adhésif appliqué sur le film. La force de pelage peut être mesurée en suivant le test élaboré par la Fédération Internationale des Fabricants et transformateurs d'Adhésifs et Thermocollants sur papiers et autres supports (FINAT), FTM 10, intitulé "Quality of silicone coated substrates for self-adhesive laminates : release force (300 mm per minute)". Les adhésifs suivants peuvent être utilisés :
- tesa® 7475 : masse adhésive acrylique modifiée ;
- tesa® 7476 : masse adhésive caoutchouc.

De préférence, la face exposée aux UV après insolation présente une force de pelage inférieure ou égale à 10 cN/cm, de préférence inférieure ou égale à 5 cN/cm.

Le film obtenu possède de préférence une énergie de surface comprise allant de 20 à 35 mN/m, de préférence allant de 21 à 28 mN/m, et encore préférentiellement allant de 21 à 25.

Le procédé selon l'invention présente les avantages suivants:
- il permet d'obtenir un film présentant une plus faible énergie de surface que celui décrit dans la demande FR 13 01557.
- la fixation du silicone dans la matrice de polyoléfine, après réticulation par les UV, est accrue. Cela permet de réduire la migration du silicone vers la composition adhésive, donc de réduire la pollution de la composition adhésive par le silicone.
- il permet d'utiliser moins de silicone pour une masse donnée de polyéthylène.
- il permet d'éviter l'apparition d'une coloration blanchâtre du film causée par une mauvaise dispersion du silicone dans le film. Cette mauvaise dispersion provoque la formation de points blancs dans le film.
- il permet d'obtenir un film présentant une meilleure stabilité thermique que le film décrit dans FR 13 01557.
- il permet d'améliorer les propriétés mécaniques du film décrit dans FR 13 01557. En effet, le film décrit dans FR 13 01557 peut présenter des zones réticulées qui ont un impact négatif sur les propriétés mécaniques.

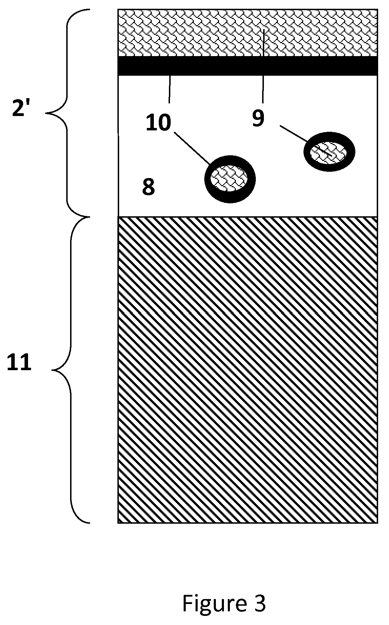

La Figure 3 représente un mode de réalisation de l'invention dans lequel un film est obtenu par coextrusion d'une composition selon l'invention (2') avec une composition polymérique (11), par exemple à base de polyéthylène ou de polypropylène, destinée à servir de couche protectrice. Au cours de la coextrusion, les inclusions (9) de polysiloxane enrobées d'agent compatibilisant (10) et dispersées dans la matrice (8) migrent spontanément vers la surface de la couche qui ne se trouve pas en contact avec la composition polymérique. On constate qu'après extrusion, la face de la couche (2') en contact avec la couche (11) issue de la composition polymérique est pratiquement dépourvue de polysiloxane, tandis que la face supérieure de la couche (2') en contact avec l'air ambiant contient la quasi totalité du polysiloxane (9). Après extrusion, l'insolation par un rayonnement UV de la surface supérieure du film permet de réticuler le polysiloxane fonctionnalisé par des fonctions époxy pour ainsi le figer en masse à la surface du film afin qu'il ne migre plus, tant dans le film que sur un autre support.

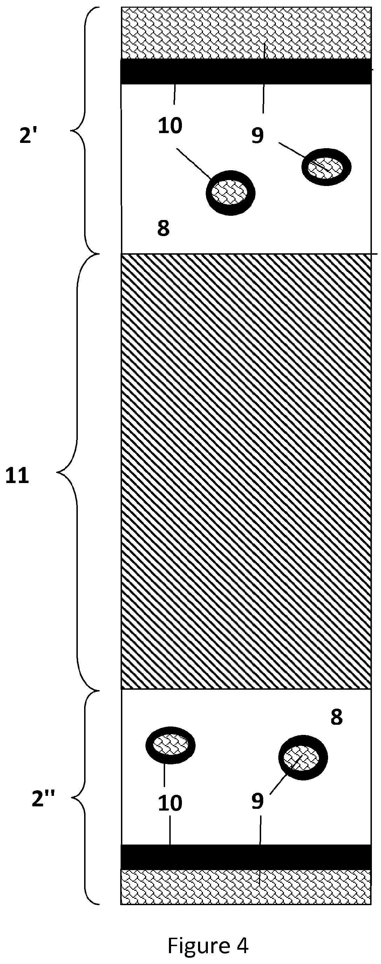

La Figure 4 représente schématiquement un second mode de réalisation de l'invention dans lequel un film comprenant trois couches (2', 11 et 2") est obtenu par coextrusion de deux compositions selon l'invention (couches 2', 2") et d'une composition polymérique (11). La couche polymérique (11) est prise en sandwich entre les deux couches (2, 2"). Au cours de l'extrusion, le polysiloxane présent dans les compositions conduisant aux couches (2) et (2") migre spontanément vers la surface de la couche en contact avec l'air ambiant, c'est-à-dire les faces inférieure et supérieure du film. Après extrusion, celles-ci sont irradiées par un rayonnement UV, ce qui permet de réticuler le polysiloxane fonctionnalisé par des fonctions époxy.

L'invention permet de s'affranchir du dépôt d'une couche d'un matériau conférant des propriétés anti-adhérentes, telle que la couche (6) de la figure 1.

Le film selon l'invention est généralement utilisé dans les applications étiquettes, rubans adhésifs, films pour les arts graphiques (supports publicitaires, information). L'avantage du procédé selon l'invention est qu'il permet par les seules étapes d'extrusion et d'étirement d'obtenir un film présentant des propriétés de surface non adhérentes alors que le procédé de fabrication d'un film non adhérent de l'art antérieur requiert après les étapes d'extrusion et d'étirement, une étape ultérieure d'enduction du film obtenu.

## Revendications

1. Composition comprenant:
a) au moins 50 % en masse d'une matrice de polyoléfine (8) ;
b) un polysiloxane (9) fonctionnalisé par des fonctions époxy;
c) un agent compatibilisant (10) de la polyoléfine avec le polysiloxane, ledit agent compatibilisant étant obtenu par formation de fonctions imide entre une polyoléfine greffée par des fonctions anhydride maléique et un polysiloxane mono- ou difonctionnalisé par des fonctions amine primaire ;
la polyoléfine de la matrice et de l'agent compatibilisant étant soit un polyéthylène, soit un polypropylène.

2. Composition selon la revendication 1, comprenant moins de 1 %, de préférence 0,1 % ou moins en masse d'un amorceur de polymérisation cationique, activable par rayonnement UV.

3. Composition selon la revendication 2, ne comprenant pas d'amorceur de polymérisation cationique, activable par rayonnement UV.

4. Composition selon l'une des revendications précédentes, dans laquelle le polysiloxane mono- ou difonctionnalisé par des fonctions amine primaire présente avant fonctionnalisation une masse molaire comprise entre 200 et 20000 g/mol, de préférence entre 3000 et 12000 g/mol, de préférence encore entre 6000 et 10000 g/mol.

5. Composition selon l'une des revendications 1 ou 4, comprenant:
a) de 80 à 97,9 % en masse de polyoléfine ;
b) de 2 à 10 % en masse de polysiloxane fonctionnalisé par des fonctions époxy ;
c) de 0,1 à 10 % en masse d'agent compatibilisant.

6. Composition dans laquelle la polyoléfine est un polyéthylène de densité comprise entre 0,910 et 0,930 g·cm⁻³ selon la norme ISO1183.

7. Procédé de fabrication de la composition selon l'une des revendications précédentes comprenant les étapes de:
i) préparation d'un agent compatibilisant (10) par formation de fonctions imide entre une polyoléfine greffée par des fonctions anhydride maléique et un polysiloxane mono- ou difonctionnalisé par des fonctions amine primaire;
ii) mélange de l'agent compatibilisant avec une polyoléfine (8) et un polysiloxane (9) fonctionnalisé par des fonctions époxy, les polyoléfines utilisées aux étapes i) et ii) étant soit un polyéthylène, soit un polypropylène ;
iii) éventuellement, ajout d'un amorceur de polymérisation au mélange de l'étape ii).

8. Procédé de fabrication d'un film (2') comprenant les étapes de :
a) approvisionnement de la composition selon l'une des revendications 1 à 6 ou préparation de ladite composition selon le procédé tel que décrit dans la revendication 7;
b) extrusion de la composition pour former un film;
c) étirement du film ;
d) exposition du film à un rayonnement UV.

9. Procédé selon la revendication 8, dans lequel la composition obtenue à l'étape a) est co-extrudée à l'étape b) avec un film (11) de polyéthylène ou de polypropylène.

10. Procédé de fabrication selon la revendication 8, dans lequel on ajoute un amorceur de polymérisation cationique, activable par rayonnement UV, de préférence à une proportion inférieure à 1 % en masse de la composition à l'étape b).

11. Procédé de fabrication selon l'une des revendications 8 à 10, dans lequel la proportion de l'amorceur de polymérisation cationique, activable par rayonnement UV est inférieure ou égale à 0,1 % en masse de la composition.

12. Film susceptible d'être obtenu par le procédé selon l'une des revendications 8 à 11.

13. Etiquette auto-adhésive comprenant une couche support (11) et une couche protectrice (2', 2") comprenant le film selon la revendication 12.
